Europäisches Patentamt

European Patent Office

Office européen des brevets

(11) Publication number: **0 134 657**

**A2**

(12) **EUROPEAN PATENT APPLICATION**

(21) Application number: **84304666.5**

(22) Date of filing: **09.07.84**

(51) Int. Cl.⁴: **B 60 K 28/00**
**B 62 D 11/00**

(30) Priority: **09.07.83 GB 8318629**

(43) Date of publication of application:
**20.03.85 Bulletin 85/12**

(84) Designated Contracting States:
**AT BE DE FR GB IT NL SE**

(71) Applicant: **J. I. Case Company**
**700 State Street**
**Racine, WI 53404(US)**

(72) Inventor: **Varley, Kenneth**
**8 Penmorvah Mylor Bridge**
**Falmouth Cornwall(GB)**

(74) Representative: **Norcliffe, Kenneth Adrian**
**Patents & Trade Marks Department Case Tractors**
**formerly David Brown Tractors Limited**
**Meltham Huddersfield, HD7 3AR West Yorkshire(GB)**

(54) **Skid-steer vehicle.**

(57) In a skid-steer vehicle having its wheels 11 on one side driven and controlled independently of those on the other side, two main hand levers 21 and 121 control the wheels and two subsidiary hand levers 22 and 122 mounted on the main levers control a bucket loader fitted on the vehicle. Power-operated loader booms 12 on either side of the operator constitute a safety hazard when he enters or leaves the vehicle. Restraint bars 27 and 127 which oblige the operator to immobilise both the wheels and the loader before he can leave the vehicle are pivotable on opposite sides of the vehicle between upwardly-extending positions permitting egress and entry, in which positions respective locking members 40 and 140 linked to the bars engage the subsidiary levers to hold both the subsidiary and main levers in their neutral positions, and laterally-inwardly-extending positions blocking egress, in which positions the locking members do not engage the subsidiary levers whereby the subsidiary and main levers are freely moveable.

Fig.3.

## Skid-Steer Vehicle

This invention relates to a skid-steer vehicle, and more particularly to the provision of operator restraint means on such a vehicle.

Skid-steer vehicles are well known, and have their traction means (which may comprise wheels or endless tracks) on one side driven and controlled independently of those on the other side. Left-hand and right-hand hand levers, each of which is individually moveable forwardly and rearwardly from a neutral position by the operator, are generally provided for controlling the speed and direction of rotation of the left-hand side and right-hand side traction means respectively. Such a vehicle is highly manoeuvreable and can be turned through 360° in its own length by causing its traction means on one side to rotate in the opposite direction to and at the same speed as those on the other side.

Skid-steer vehicles for industrial use are often fitted with work attachments such as bucket loaders, and the power-operated booms of these are frequently disposed on either side of the operator and thus constitute a safety hazard especially when he enters or leaves the vehicle, passing under or over the booms and/or bucket in so doing.

The object of the present invention is to provide a skid-steer vehicle having a work attachment with restraint means which oblige the operator to immobilise both the traction means and the work attachment before he can leave his seat on the vehicle.

According to the invention, a skid-steer vehicle having left-hand and right-hand main hand levers each of which is individually moveable forwardly and rearwardly from a neutral position by the operator for controlling the speed and direction of rotation of the traction means on the associated side of the vehicle, two subsidiary hand levers disposed at the upper ends of the respective main levers and each individually moveable to either side of a neutral position by the operator for controlling one of the functions of a work attachment mounted on the vehicle, and operator restraint means moveable by the operator between one position permitting the operator to leave and enter the vehicle and another position blocking the operator's exit from the vehicle, is characterised in that movement of the operator restraint means to said one position actuates two locking devices which engage the respective subsidiary levers so as to hold both the subsidiary and main levers in their neutral positions, and in that movement of said means to said other position de-actuates said devices so as to leave the subsidiary and main levers freely moveable.

A preferred embodiment of the invention will now be described, by way of example only, with reference to the accompanying drawings of which :-

Fig. 1 is a side elevation of a skid-steer vehicle having a work attachment;

Fig. 2 is a rear elevation, that is to say a view from the operator's seat, on a larger scale of freely moveable left-hand and right-hand control levers for the vehicle and its attachment, of lowered restraint means for the operator, and of disengaged locking devices for the control levers one of which devices is shown in section;

Fig. 3 is a similar view to Fig. 2 showing the control levers immobilised by the locking devices when the restraint means are raised; and

Figs. 4a and 4b are respectively a section on the line 4a-4a in Fig. 3 and a section on the line 4b-4b in Fig. 2.

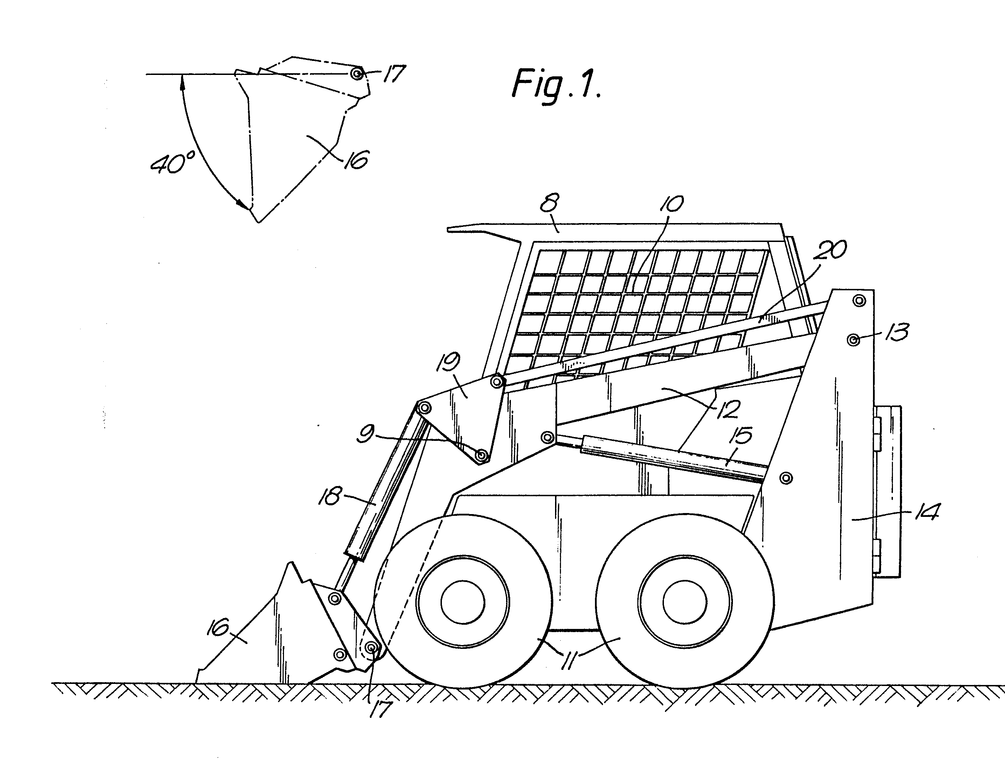

Referring now to Fig. 1, a skid-steer vehicle has a roll-over protection structure 8 including apertured sheet metal side screens 10 surrounding the operator and traction means comprising two hydrostatically-driven wheels 11 on each side, the wheels on one side being driven and controlled independently of those on the other side. The vehicle is fitted with a work attachment in the form of a bucket loader comprising two interconnected loader booms 12 disposed on opposite sides of the structure 8 and pivotable about a common axis 13 on fixed frame members 14 at the rear of the vehicle by respective hydraulic cylinders 15, and a bucket 16 disposed at the front of the vehicle and pivotable about an axis 17 on the free ends of the booms 12 by two hydraulic cylinders 18 disposed at opposite sides of the vehicle. Each of the cylinders 18 is connected between one side of the bucket 16 and a plate 19 pivotable about an axis 9 on the associated boom 12, and each plate 12 is connected to the frame member 14 by a link 20 which automatically keeps the angular disposition of the bucket 16 relative to the ground constant whilst the booms 12 are being raised and lowered by the cylinders 15. When the booms 12 are raised the bucket 16 can be tipped as shown at the top left of Fig. 1 by means of the cylinders 18.

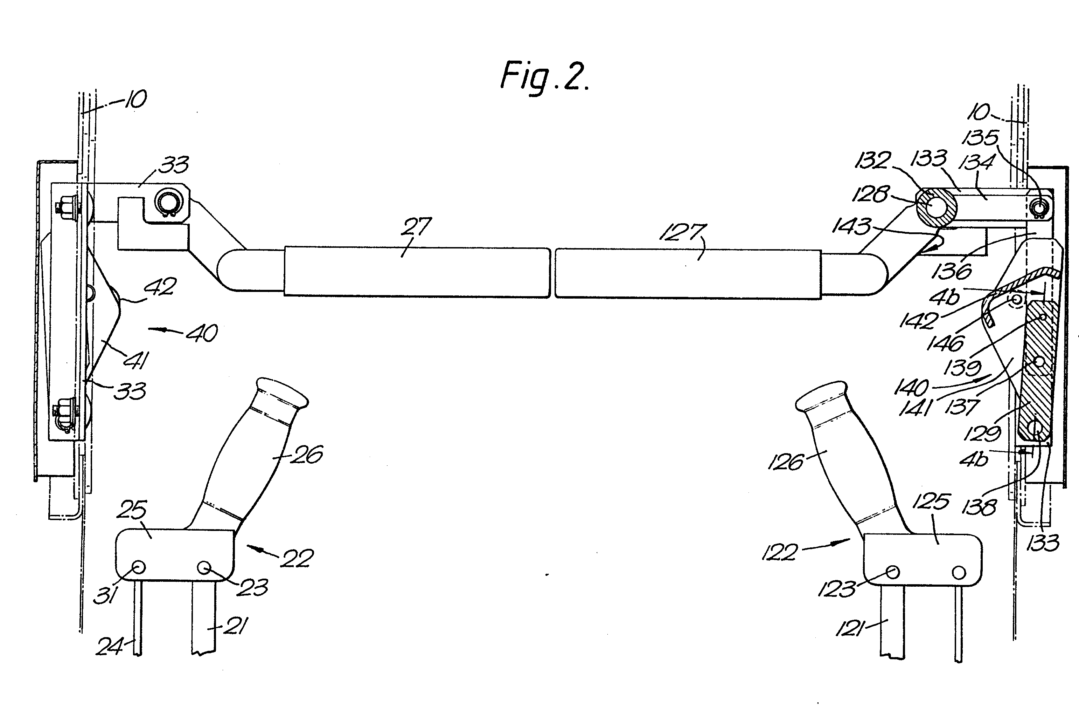

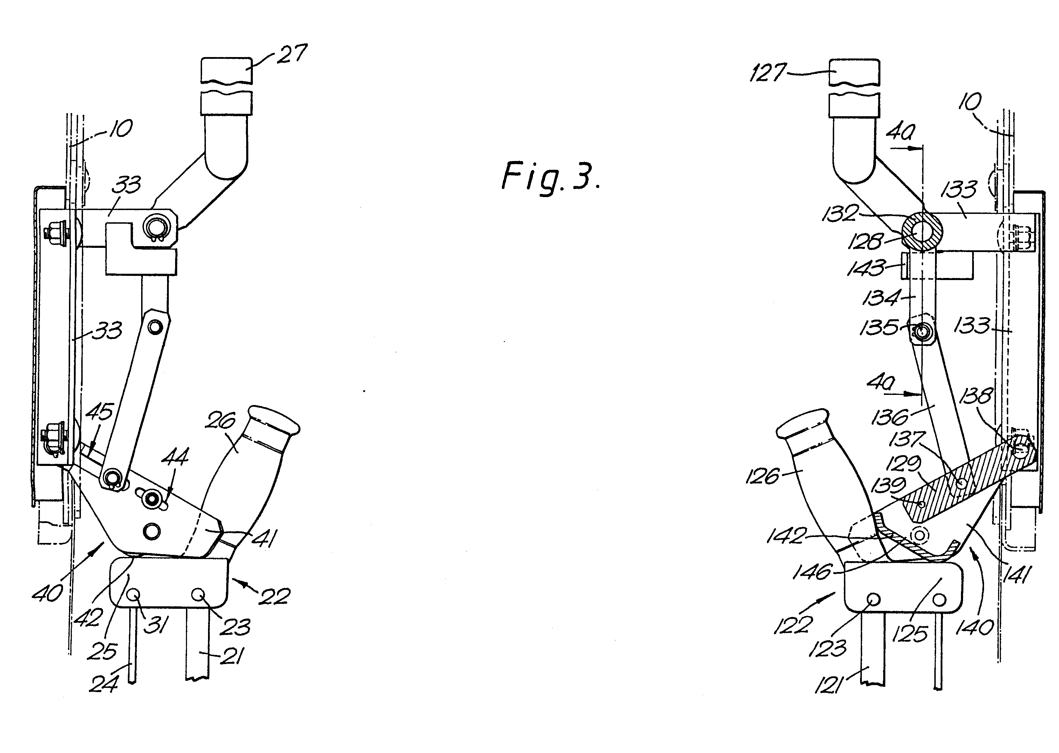

Referring now to Figs. 2 and 3, the two wheels 11 on the left-hand side of the vehicle are controlled by a left-hand main hand lever 21 which is moveable forwardly and rearwardly by the operator from the neutral position illustrated about an axis (not shown) at its lower end which extends laterally of the vehicle. Progressive forward movement of the lever 21 from its neutral position causes the two left-hand wheels 11 to rotate at a progressively increasing speed in the direction appropriate for forward travel, whilst movement of said lever back towards its neutral position causes the rotational speed of said wheels to decrease. Similarly, progressive rearward movement of the lever 21 from its neutral position causes the two left-hand wheels 11 to rotate at a progressively increasing speed in the direction appropriate for rearward travel, whilst movement of said lever back towards its neutral position causes the rotational speed of said wheels to decrease. The two wheels on the right-hand side of the vehicle are controlled in exactly the same manner by a right-hand main hand lever 121, the two main hand levers 21 and 121 being moveable individually so that, for example, to make a gradual turn to the left during forward travel, the right-hand main hand lever 121 is moved slightly further forward from its neutral position than is the left-hand main hand lever 21.

A left-hand subsidiary hand lever indicated generally at 22 in the form of a bell-crank lever is moveable by the operator to either side of the neutral position illustrated about a pivot pin 23 which is disposed at the upper end of the left-hand main hand lever 21 and extends longitudinally of the vehicle. A control rod 24 pivotally connected at its upper end by a pin 31 to one arm 25 of the lever 22 and operatively connected at its lower end to valve means (not shown) for controlling the hydraulic cylinders 15 is disposed in substantially parallel relationship to the lever 21. The other arm 26 of the lever 22 serves as the hand grip of said lever and also as the hand grip of the lever 21. Movement of the lever 22 to one side of its neutral position causes the hydraulic cylinders 15 to raise the loader booms 12 to any desired position between their upper and lower limits, whereupon release of said lever permits it to return to its neutral position while the booms 12 remain hydraulically locked in their raised position. Similarly, movement of the lever 22 to the other side of its neutral position causes the hydraulic cylinders 15 to lower the booms 12 to any desired position, whereupon release of said lever permits it to return to its neutral position whilst the booms 12 remain hydraulically locked in their chosen position. The loader bucket 16 is controlled in exactly the same manner by a right-hand subsidiary hand lever indicated generally at 122 in the form of a bell-crank lever having arms 125 and 126. The lever 122 is moveable about a pivot pin 123 disposed at the upper end of the right-hand main hand lever 121, such that movement of the right-hand subsidiary lever 122 to one side of its neutral position causes the hydraulic cylinders 18 to roll the bucket 16 backwards towards its full position whilst movement of the lever 122 to the other side of its neutral position causes the cylinders 18 to roll the bucket 16 forwards towards its tipped position.

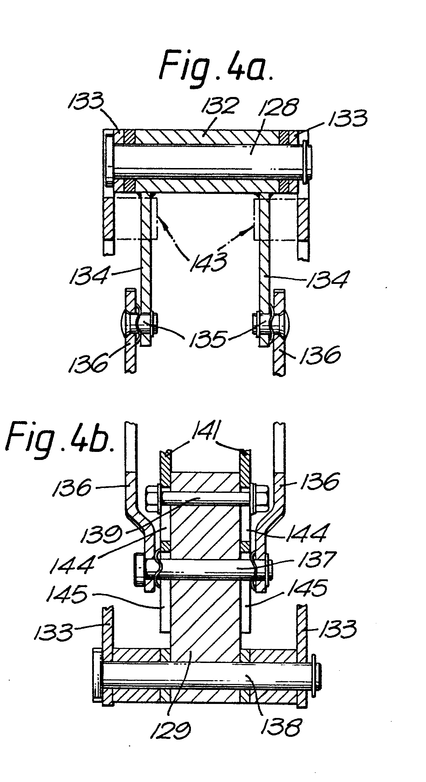

A right-hand side operator restraint member comprising a rearwardly cranked bar 127 welded to a short tube 132 is pivotable about a pin 128 which extends longitudinally of the vehicle and is carried by a bracket assembly 133 adjustably bolted to the right-hand side screen 10. As shown in Figs. 4a and 4b, two parallel arms 134 welded to the tube 132 are pivotally connected by respective pins 135 to the ends of parallel links 136, the other ends of which are pivotally connected by a common pin 137 to an intermediate point on an arm 129 pivotable about a pin 138 which extends longitudinally of the vehicle and is carried by the bracket assembly 133. Adjustable along the arm 129 and secureable thereto by a bolt 139 is a locking member indicated generally at 140 comprising an abutment 142 welded between two side-plates 141 each of which is slotted at 144 and 145. The arm 129 and the member 140 together constitute a pivotable locking device of adjustable length and having a forked free end. The restraint bar 127 is held in a lowered laterally-inwardly-extending position whilst the locking member 140 is held in a raised inoperative position, as shown in Fig. 2, by an over-centre action due to the pin 137 having passed through the plane containing the axes of the pins 135 and 138 until stops consisting of pins 146 welded to the respective side-plates 141 so as to project outwards therefrom have contacted the respective links 136. To release the restraint bar 127 from its lowered position the operator presses it upwards causing the pin 137 to pass back through the plane containing the axes of the pins 135 and 138. The restraint bar 127 can then be moved freely upwards towards the raised upwardly-extending position shown in Fig. 3 until pressure is required to cause the pins 135 to pass through the plane containing the axes of the pins 128 and 137 whereupon the arms 134 contact respective stops 143 welded to the bracket assembly 133. This over-centre action holds the restraint arm 127 in its raised position, and also holds the locking member 140 in its lowered operative position. The position of the bracket assembly 133 on the right-hand side screen 10, and the position of the locking member 140 on the arm 129, have been so pre-adjusted that in order to move the member 140 into its lowered operative position, in which the abutment 142 contacts inter alia the arm 126 of the lever 122, the operator has to exert sufficient upward pressure on the restraint bar 127 to flex the right-hand side screen 10 as well as to move the pins 135 over-centre. The abutment 142 is thus urged firmly against the arm 126 by the elasticity of the flexed side screen 10. To lower the restraint bar 127 from its raised position and release the locking member 140 from the lever 122 the operator presses said bar downwardly causing the pins 135 to pass back through the plane containing the axes of the pins 128 and 137 and releasing the right-hand side screen 10 from flexure, the momentum of said bar then being sufficient to move it towards, and hold it by over-centre action in, its lowered position shown in Fig. 2. A corresponding left-hand side restraint bar 27, and a corresponding interconnected locking member indicated generally at 40 comprising an abutment 42 welded between two side-plates 41 each of which is slotted at 44 and 45, are likewise mounted pivotally on a bracket assembly 33 adjustably bolted to the left-hand side screen 10. The arrangement is such that when the bars 27 and 127 are in their lowered laterally-inwardly-extending positions the locking members 40 and 140 occupy their raised inoperative positions as shown in Fig. 2, and when the bars 27 and 127 are in their raised upwardly-extending positions the locking members 40 and 140 occupy their lowered operative positions in which their side-plates 41 and 141 embrace respectively the arms 26 and 126 of the levers 22 and 122 whilst their abutments 42 and 142 contact respectively both arms 25 and 26 of the lever 22 and both arms 125 and 126 of the lever 122 as shown in Fig. 3.

In operation, when the operator is seated in the vehicle and has moved the two restraint bars 27 and 127 into their lowered positions they block his exit from the vehicle whilst leaving the left-hand main and subsidiary hand levers 21 and 22 and the right-hand main and subsidiary hand levers 121 and 122 freely moveable as exemplified in Fig. 2. Before leaving the vehicle, the operator brings it to rest, adjusts the angular disposition of the bucket 16 substantially to that shown in Fig. 1, and brings the loader booms 12 to their fully lowered position. He then moves the restraint bars 27 and 127 into their raised positions to enable him to leave and re-enter the vehicle, thereby actuating the locking members 40 and 140 which assume their lowered operative positions as exemplified in Fig. 3 and accordingly engage the subsidiary hand levers 22 and 122 so as positively to hold both said subsidiary levers and the main hand levers 21 and 121 in their neutral positions and thus ensure the safety of the operator as he leaves and enters the vehicle, climbing over the loader booms 12 and/or bucket 16 in so doing.

In a modification, the operator restraint means can comprise a single laterally-extending bar which is slideable in vertical guides between raised and lowered positions and which is operatively connected to the two locking devices.

Claims:

1. A skid-steer vehicle having left-hand and right-hand main hand levers each of which is individually moveable forwardly and rearwardly from a neutral position by the operator for controlling the speed and direction of rotation of the traction means on the associated side of the vehicle, two subsidiary hand levers disposed at the upper ends of the respective main levers and each individually moveable to either side of a neutral position by the operator for controlling one of the functions of a work attachment mounted on the vehicle, and operator restraint means moveable by the operator between one position permitting the operator to leave and enter the vehicle and another position blocking the operator's exit from the vehicle,

characterised in that movement of the operator restraint means to said one position actuates two locking devices which engage the respective subsidiary levers so as to hold both the subsidiary and main levers in their neutral positions, and in that movement of said means to said other position de-actuates said devices so as to leave the subsidiary and main levers freely moveable.

2. A skid-steer vehicle according to claim 1, further characterised in that the operator restraint means comprise two restraint members which are pivotable by the operator between raised and lowered positions about axes disposed longitudinally of the vehicle at each side thereof and are interconnected to the respective locking devices.

3. A skid-steer vehicle according to claim 2, further characterised in that each operator restraint member is a bar which extends upwards in its raised position and laterally inwards in its lowered position.

4. A skid-steer vehicle according to claim 2 or claim 3, further characterised in that link means interconnecting the restraint members and the respective locking devices lie over-centre when said members have been moved fully into their raised and lowered positions.

5. A skid-steer vehicle according to any one of the preceding claims, further characterised in that the subsidiary hand levers are bell-crank levers and in that the locking devices are pivotable about axes disposed longitudinally of the vehicle at each side thereof and are each capable of contacting both arms of the adjacent subsidiary lever whilst simultaneously embracing one of said arms.

6. A skid-steer vehicle according to claim 5, further characterised in that each locking device comprises a pivotable arm having adjustable along it a locking member on which there are formed an abutment for contacting both arms of the adjacent subsidiary lever and a forked free end for embracing said one of said arms.

7. A skid-steer vehicle according to any one of the preceding claims, further characterised in that the locking devices are mounted on respective screens disposed at each side of the operator, actuation of said devices causing flexure of said screens which holds said devices firmly in engagement with the respective subsidiary levers.

8. A skid-steer vehicle according to any one of the preceding claims, further characterised in that the work attachment is a bucket loader and in that one subsidiary lever controls the loader booms while the other controls the bucket.

9. A skid-steer vehicle according to any one of the preceding claims, further characterised in that the traction means comprise two power-driven wheels on each side of the vehicle.

10. A skid steer vehicle according to any one of the preceding claims, further characterised in that the traction means are hydro-statically driven.

Fig.1.

40°

17

16

8    10

20

19

13

12

9    15

18    14

16    11

17

0134657

Fig.2.

Fig. 3.

## Fig.4a.

## Fig.4b.